# EUROPEAN PATENT APPLICATION

(11) **EP 4 468 436 A2**
(43) Date of publication of application: **27.11.2024**
(21) Application number: 24155786.7
(22) Date of filing: 05.02.2024
(51) Int. Cl.: H01M 10/0525, H01M 10/0567, H01M 10/0569

(54) **ELECTROLYTE ADDITIVE FOR LITHIUM-ION BATTERY AND PREPARATION METHOD AND APPLICATION THEREOF**

(30) Priority: 24.05.2023 CN 202310595329
(71) Applicant: Hubei Wanrun New Energy Technology Co., Ltd., Shiyan, Hubei 442500 (CN)
(72) Inventor: WANG, Suping, Shiyan City, Hubei Province,, 442500 (CN); YANG, Jiaojiao, Shiyan City, Hubei Province,, 442500 (CN); WANG, Shunfei, Shiyan City, Hubei Province,, 442500 (CN); LV, Fei, Shiyan City, Hubei Province,, 442500 (CN)
(74) Representative: Laufhütte, Dieter

(57) **Abstract**

The present invention relates to the field of lithium-ion battery technology, and in particular, to an electrolyte additive for lithium-ion batteries and a preparation method and application thereof. The electrolyte additive comprises a mixture of a corrosion inhibitor, a corrosion inhibition aid, a film-forming agent and a co-solvent, and a molar ratio of the corrosion inhibitor, the corrosion inhibition aid, the film-forming agent and the co-solvent is 1:(0.1-1):(20-50): (0.01-0.1). The electrolyte additive protects electrode sheets and have a good corrosion inhibition effect through the dual synergistic protection effect of corrosion inhibition and film formation, reduces the negative impact caused by corrosion, and makes up for the vacancy of such functional additives in the field of electrolyte; in addition, the electrolyte additives of the present invention are generally applicable to various types of conventional electrolyte systems, and the preparation process is simple and easy, thus having broad application prospects.

## Description

### CROSS-REFERENCE TO RELATED APPLICATIONS

This application claims priority to Chinese patent application No. 202310595329.6 filed on Wednesday, May 24, 2023, which is incorporated herein by reference in its entirety.

### TECHNICAL FIELD

The present invention relates to the field of lithium-ion battery technology, and in particular, to an electrolyte additive for lithium-ion batteries and a preparation method and application thereof.

### BACKGROUND

During long-term use of lithium-ion batteries, electrolyte of the batteries typically corrodes components of the batteries. Conventional solutions to reduce the corrosion of a positive current collector of the lithium battery by the electrolyte include adjusting the electrolyte concentration, adding electrolyte additives, or changing the type of electrolyte solvent. However, these solutions are relatively complicated in technology and not suitable for industrial production. For instance, adjusting the electrolyte concentration may lead to a decline in the electrochemical performance of the battery; and adding additives and changing the electrolyte solvent components, although effective in inhibiting the corrosion, requires specific choices of additives or electrolyte types based on the specific electrolyte components, and is not universally applicable and is obviously subjected to certain technical thresholds.

Currently, commercially available electrolyte additives include overcharge protectors, film-forming additives, flame retardants, and additives to improve low-temperature performance. However, there are almost no specific corrosion inhibition additives for the problem of electrode sheet corrosion. The issue of electrode life significantly impacts the cycling and rate performance of lithium batteries; therefore, developing corrosion inhibition additives for lithium battery electrolytes is of great value and significance.

In view of the above, the present invention is proposed.

### SUMMARY

An object of the present invention is to provide an electrolyte additive for lithium-ion batteries. In view of the corrosion defects caused by electrolytes to the cathode current collector, the present invention provides an electrolyte additive which, when applied to conventional electrolyte systems, achieves an effective corrosion inhibition effect of the electrode sheet for the purpose of protection, which fills the gap in the field of functional additives for electrolytes.

Another object of the present invention is to provide a preparation method of the electrolyte additive for lithium-ion batteries, which can be implemented simply by mixing and filtration, and thus is straightforward and easily scalable for industrial production.

Still another object of the present invention is to provide a lithium-ion battery, electrode sheets of which are protected by the electrolyte additive, thereby enhancing the rate and cycle performance of the lithium-ion battery.

To achieve the above objects of the present invention, the following technical solutions are adopted.

An electrolyte additive for lithium-ion batteries includes a mixture of a corrosion inhibitor, a corrosion inhibition aid, a film-forming agent, and a co-solvent, where a molar ratio of the corrosion inhibitor, the corrosion inhibition aid, the film-forming agent, and the co-solvent is 1:(0.1-1):(20-50):(0.01-0.1).

A preparation method of the electrolyte additive for lithium-ion batteries includes steps of: performing first mixing of a corrosion inhibitor and a film-forming agent in an inert atmosphere to obtain a mixture; and adding successively a co-solvent and a corrosion inhibition aid to the mixture to perform second mixing followed by filtration to obtain the electrolyte additive.

A lithium-ion battery includes the above-described electrolyte additive for lithium-ion batteries or the electrolyte additive for lithium-ion batteries prepared by the preparation method.

The beneficial effects of the present invention compared to the existing technology are as below.
(1) The present invention adopts a dual system of corrosion inhibition and film-forming, which significantly addresses the corrosion issue of lithium battery electrodes, especially for aluminum cathodes. For salts of lithium bis(fluorosulfonyl)imide, which have a stronger corrosive effect on aluminum electrodes compared to other electrolyte salts, it's difficult for traditional film-forming agents to fully resolve the significant performance decline due to corrosion. The present invention, through its dual chemical action of corrosion inhibition and film-forming, reduces the corrosion rate of electrodes and enhances the electrochemical performance of lithium batteries.
(2) Regarding various electrolyte solvents or electrolyte salt systems in the art, the electrolyte additive according to the present invention can provide a certain level of protection. It offers greater universality compared to previous methods that depend on specific systems for using film-forming auxiliaries. Using the additive of the present invention can effectively lower technical barriers and reduce production and application costs.
(3) The preparation method of the electrolyte additive according to the present invention does not involve complicated chemical reactions. The method mainly achieves homogeneous dispersion through stirring, and no by-products are generated during the process. This aligns with the concept of green and environmental protection, making it suitable for large-scale industrial production.

### DETAILED DESCRIPTION

The examples of the present invention will now be described more fully hereinafter with reference to the accompanying drawings and detailed description, but it will be understood by a person skilled in the art that the examples described below are part, but not all, of the examples of the present invention and are presented by way of illustration only and should not be taken as limiting the scope of the present invention. Based on the examples of the present invention, all other examples obtained by a person skilled in the art without involving any inventive effort fall within the scope of protection of the present invention. Where specific conditions are not specified in the examples, they are carried out according to conventional conditions or conditions suggested by a manufacturer. The reagents or instruments used are not specified by the manufacturer and are conventional products commercially available.

In a first aspect, examples of the present invention provide an electrolyte additive for lithium-ion batteries, which includes a mixture of a corrosion inhibitor, a corrosion inhibition aid, a film-forming agent and a co-solvent, and the molar ratio of the corrosion inhibitor, the corrosion inhibition aid, the film-forming agent and the co-solvent is 1:(0. 1-1):(20-50): (0.01-0.1).

On one hand, the electrolyte additives for lithium-ion batteries in the examples of the present invention are prepared by combining a corrosion inhibitor and a film-forming agent, having a synergistic effect. Specifically, in lithium battery applications, the aldehyde group in the corrosion inhibitor molecules, being a strong polar group, can reduce the nucleation potential of lithium ions, thereby decreasing the occurrence of lithium dendrites. Meanwhile, during the formation of the Solid Electrolyte Interface (SEI) film by the film-forming agent on the electrode sheet, the coordination between the aldehyde group and the vacant orbitals of aluminum strengthens the adhesion between the SEI and the electrode sheet, thereby enhancing the overall stability of the SEI film. This film can act as an efficient ion channel, effectively addressing the corrosion issue of lithium battery electrodes, particularly for the corrosion of aluminum cathodes. On the other hand, the above active components are combined with a corrosion inhibition aid and a co-solvent. Through the combination of these components, not only the individual functions of each component are fully utilized, but also a synergistic effect among them is achieved, thus endowing the electrolyte additive for lithium-ion batteries according to the present invention with corrosion inhibition properties.

In a preferred embodiment, the molar ratio of the corrosion inhibitor, the corrosion inhibition aid, the film-forming agent and the co-solvent is 1:(0.1-0.4):(30-40):(0.01-0.03).

In a preferred embodiment, the corrosion inhibitor includes at least one of lithium metaphosphate, lithium guanosine triphosphate, α,β-methyleneadenosine 5'-triphosphate lithium salt , and (S)-ganciclovir-5'-triphosphate lithium salt. The corrosion inhibitor contains a cyclic group and an aldehyde group in the chemical structure, where the aldehyde group is a polar group, and can form coordination interaction with the aluminum vacant orbital, and at the same time, further enhancing the adsorption between the corrosion inhibitor and the electrode sheet to achieve an enhanced corrosion inhibition effect. At the same time, after the corrosion inhibitor is dissolved in an ester-based or sulfone-based electrolyte solvent, phosphate ions are obtained through ionization, which form a good adsorption effect with the aluminum electrode sheet, and thus having an excellent protective effect for the aluminum cathode.

In a preferred embodiment, the corrosion inhibition aid includes at least one of terephthalaldehyde, 6-(2-thienyl)-2-pyridinecarboxaldehyde, N-methyl-N-(2-hydroxyethyl)-4-aminobenzaldehyde, 2-pyrrolylcarboxaldehyde, 1-methyl-2-pyrrolylcarboxaldehyde, and 3-pyrrolylcarboxaldehyde. The conductivity of the electrolyte can be improved to a certain extent and the electrochemical performance can be improved by using conjugated π-bonded macromolecules as the corrosion inhibition aid.

In a preferred embodiment, the film-forming agent includes at least one of fluoroethylene carbonate and ethylene carbonate. Fluoroethylene carbonate or ethylene carbonate is selected as a film-forming agent, which can form a SEI film with the aluminum electrode sheet, thereby achieving a purpose of protecting the electrode sheet.

In a preferred embodiment, the co-solvent includes at least one of flumiclorac-pentyl, perfluorotripropylamine, cinflumide and teriflunomide. The solubility of the corrosion inhibitor in the electrolyte is relatively low, and the addition of the co-solvent can effectively improve the solubility of the corrosion inhibitor, and with the increase of the solubility, the above-mentioned technical effect is also improved.

In a preferred embodiment, when two components are selected for the corrosion inhibitor, the corrosion inhibition aid, the film-forming agent or the co-solvent, the molar ratio of the two components is 1:1; for example: for the corrosion inhibitor, when a dual-component combination of lithium metaphosphate and lithium guanosine triphosphate is used, the molar ratio of lithium metaphosphate to lithium guanosine triphosphate is 1:1.

In a second aspect, examples of the present invention provide a preparation method of an electrolyte additive for lithium-ion batteries, which includes the steps of:

performing first mixing of a corrosion inhibitor and a film-forming agent in an inert atmosphere to obtain a mixture; and adding successively a co-solvent and a corrosion inhibition aid to the mixture to perform second mixing followed by filtration to obtain the electrolyte additive.

In the examples of the present invention, the preparation process of the electrolyte additive does not involve complicated chemical reactions, the process achieves homogeneous dispersion mainly by stirring, and no by-products are generated in the process, which conforms to the concept of green environment protection and is suitable for large-scale industrial production.

In a preferred embodiment, the first mixing is performed for 1 to 3 hours, and the second mixing is performed for 12 to 16 hours.

In a preferred embodiment, both the first mixing and the second mixing are performed by mechanical stirring, where the first mixing is performed for, but not limited to, 1, 1.2, 1.5, 1.8, 2, 2.2, 2.5, 2.8, or 3 hour(s), and the second mixing is performed for, but not limited to, 12, 12.5, 13, 13.5, 14, 14.5, 15, 15.5, or 16 hour(s).

In a preferred embodiment, the inert atmosphere includes, but is not limited to, a nitrogen, helium, neon, or argon atmosphere.

In a preferred embodiment, the filtration is performed using a filter screen having a mesh size of 150 to 300 mesh, and in a more preferred embodiment, the filter screen for the filtration has a mesh size of 200 mesh.

In a preferred embodiment, the filtration is independently performed 2 to 4 times.

In a third aspect, examples of the present invention provide a lithium-ion battery including the electrolyte additive for lithium-ion batteries as hereinbefore described or an electrolyte additive for lithium-ion batteries obtained by the method as hereinbefore described.

Due to the good corrosion inhibition properties of the electrolyte additives for lithium-ion batteries mentioned in the text above, and the fact that the electrolyte in the lithium-ion batteries provided in the present invention includes these additives, the batteries provided by the present invention possess excellent electrochemical performance, with improved rate capability and cycling performance.

In a preferred embodiment, the electrolyte additive is used in an amount of 0.5% to 1.5% based on the total mass of the electrolyte in the lithium-ion battery.

In a preferred embodiment, the cathode of the lithium-ion battery is an aluminum current collector. In another preferred example, the lithium salt of the electrolyte in the lithium-ion battery is a bis(fluorosulfonyl)imide salt.

### Example 1

This example provides an electrolyte additive for lithium-ion batteries and a preparation method thereof.

An electrolyte additive for lithium-ion batteries, which includes:
a mixture of 100 parts by weight of lithium metaphosphate, 3700 parts by weight of fluoroethylene carbonate, 15.6 parts by weight of terephthalaldehyde and 4.9 parts by weight of flumiclorac-pentyl.

The preparation method includes the steps of:
in a nitrogen atmosphere, 100 parts of lithium metaphosphate were weighed and added to 3700 parts of fluoroethylene carbonate to obtain a mixture, the mixture was stirred for 2 h, then 15.6 parts of terephthalaldehyde and 4.9 parts of flumiclorac-pentyl were added successively, stirring was continued for another 12 h, and after the stirring was finished, filtration was performed using a 200-mesh filter screen 3 times to obtain the electrolyte additive.

### Example 2

This example provides an electrolyte additive for lithium-ion batteries and a preparation method thereof.

An electrolyte additive for lithium-ion batteries, which includes:
a mixture of 100 parts by weight of lithium metaphosphate, 4930 parts by weight of fluoroethylene carbonate, 44 parts by weight of 6-(2-thienyl)-2-pyridinecarboxaldehyde and 10 parts by weight of flumiclorac-pentyl.

The preparation method includes the steps of:
in a nitrogen atmosphere, 100 parts of lithium metaphosphate were weighed and added to 4930 parts of fluoroethylene carbonate, and the mixture was stirred for 2 h, 44 parts of 6-(2-thienyl)-2-pyridinecarboxaldehyde and 10 parts of flumiclorac-pentyl were added successively, stirring was continued for another 12 h, and after the stirring was finished, filtration was performed using a 200-mesh filter screen 3 times to obtain the electrolyte additive.

### Example 3

This example provides an electrolyte additive for lithium-ion batteries and a preparation method thereof.

An electrolyte additive for lithium-ion batteries, which includes:
a mixture of 100 parts by weight of lithium metaphosphate, 3700 parts by weight of fluoroethylene carbonate, 62.5 parts by weight of N-methyl-N-(2-hydroxyethyl)-4-aminobenzaldehyde and 15 parts by weight of flumiclorac-pentyl.

The preparation method includes the steps of:
in a nitrogen atmosphere, 100 parts of lithium metaphosphate were weighed and added to 3700 parts of fluoroethylene carbonate, stirring was continued for another 1h, then 62.5 parts of N-methyl-N-(2-hydroxyethyl)-4-aminobenzaldehyde and 15 parts of flumiclorac-pentyl were added successively, stirring was continued for another 14h, and after the stirring was finished, filtration was performed using a 200-mesh filter screen 3 times to obtain the electrolyte additive.

### Example 4

This example provides an electrolyte additive for lithium-ion batteries and a preparation method thereof.

An electrolyte additive for lithium-ion batteries, which includes: a mixture of 100 parts by weight of α,β-methyleneadenosine 5'-triphosphate lithium salt , 615 parts by weight of fluoroethylene carbonate, 33 parts by weight of N-methyl-N-(2-hydroxyethyl)-4-aminobenzaldehyde and 6 parts by weight of perfluorotripropylamine.

The preparation method includes the steps of:
in an Ar atmosphere, 100 parts of α,β-methyleneadenosine 5'-triphosphate lithium salt were weighed and added to 615 parts of fluoroethylene carbonate to obtain a mixture, the mixture was stirred for 3 h, then 33 parts of 2-pyrrolylcarboxaldehyde and 6 parts of perfluorotripropylamine were added successively, stirring was continued for another 16 h, and after the stirring was finished, filtration was performed using a 200-mesh filter screen 3 times to obtain the electrolyte additive.

### Example 5

This example provides an electrolyte additive for lithium-ion batteries and a preparation method thereof.

An electrolyte additive for lithium-ion batteries, which includes: a mixture of 100 parts by weight of α,β-methyleneadenosine 5'-triphosphate lithium salt , 615 parts by weight of fluoroethylene carbonate, 33 parts by weight of N-methyl-N-(2-hydroxyethyl)-4-aminobenzaldehyde and 6 parts by weight of perfluorotripropylamine.

The preparation method includes the steps of:
in an Ar atmosphere, 100 parts of lithium guanosine triphosphate were weighed and added to 800 parts of fluoroethylene carbonate to obtain a mixture, the mixture was stirred for 4 h, then 50 parts of 1-methyl-2-pyrrolylcarboxaldehyde and 12 parts of perfluorotripropylamine were added successively, stirring was continued for another 16 h, and after the stirring was finished, filtration was performed using a 200-mesh filter screen 3 times to obtain the electrolyte additive.

### Example 6

This example provides an electrolyte additive for lithium-ion batteries and a preparation method thereof.

An electrolyte additive for lithium-ion batteries, which includes: a mixture of 100 parts by weight of lithium metaphosphate, 4320 parts by weight of fluoroethylene carbonate, 45 parts by weight of 2-pyrrolylcarboxaldehyde and 10 parts by weight of perfluorotripropylamine.

The preparation method includes the steps of:
in a nitrogen atmosphere, 100 parts of lithium metaphosphate were weighed and added to 4320 parts of fluoroethylene carbonate to obtain a mixture, the mixture was stirred for 3 h, then 45 parts of 2-pyrrolylcarboxaldehyde and 10 parts of perfluorotripropylamine were added successively, stirring was continued for another 16 h, and after the stirring was finished, filtration was performed using a 200-mesh filter screen 3 times to obtain the electrolyte additive.

### Example 7

This example provides an electrolyte additive for lithium-ion batteries and a preparation method thereof.

An electrolyte additive for lithium-ion batteries, which includes: a mixture of 100 parts by weight of lithium metaphosphate, 3700 parts by weight of fluoroethylene carbonate, 22 parts by weight of 2-pyrrolylcarboxaldehyde, 31 parts by weight of terephthalaldehyde and 18 parts by weight of perfluorotripropylamine.

The preparation method includes the steps of:
in a nitrogen atmosphere, 100 parts of lithium metaphosphate were weighed and added to 3700 parts of fluoroethylene carbonate to obtain a mixture, the mixture was stirred for 3 h, then 22 parts of 2-pyrrolylcarboxaldehyde, 31 parts of terephthalaldehyde and 18 parts of perfluorotripropylamine were added successively, stirring was continued for another 16 h, and after the stirring was finished, filtration was performed using a 200-mesh filter screen 3 times to obtain the electrolyte additive.

### Example 8

This example provides an electrolyte additive for lithium-ion batteries and a preparation method thereof.

An electrolyte additive for lithium-ion batteries, which includes: a mixture of 100 parts by weight of lithium metaphosphate, 3700 parts by weight of fluoroethylene carbonate, 44 parts by weight of 6-(2-thienyl)-2-pyridinecarboxaldehyde, 25 parts by weight of 1-methyl-2-pyrrolylcarboxaldehyde and 18 parts by weight of perfluorotripropylamine.

The preparation method includes the steps of:
in a nitrogen atmosphere, 100 parts of lithium metaphosphate were weighed and added to 3700 parts of fluoroethylene carbonate to obtain a mixture, the mixture was stirred for 2 h, then 44 parts of 6-(2-thienyl)-2-pyridinecarboxaldehyde, 25 parts of 1-methyl-2-pyrrolylcarboxaldehyde and 18 parts of perfluorotripropylamine were added successively, the mixture was stirred for another 16 h, and after the stirring was finished, filtration was performed using a 200-mesh filter screen 3 times to obtain the electrolyte additive.

### Example 9

This example provides an electrolyte additive for lithium-ion batteries and a preparation method thereof.

An electrolyte additive for lithium-ion batteries, which includes: a mixture of 100 parts by weight of (S)-ganciclovir-5'-triphosphate lithium salt, 600 parts by weight of fluoroethylene carbonate, 44 parts by weight of 6-(2-thienyl)-2-pyridinecarboxaldehyde, 42 parts by weight of N-methyl-N-(2-hydroxyethyl)-4-aminobenzaldehyde, 22 parts by weight of 3-pyrrolylcarboxaldehyde and 18 parts by weight of perfluorotripropylamine.

The preparation method includes the steps of:
in a nitrogen atmosphere, 100 parts of (S)-ganciclovir-5'-triphosphate lithium salt were weighed and added to 600 parts of fluoroethylene carbonate to obtain a mixture, the mixture was stirred for 1 h, then 42 parts of N-methyl-N-(2-hydroxyethyl)-4-aminobenzaldehyde, 22 parts of 3-pyrrolylcarboxaldehyde and 18 parts of perfluorotripropylamine were added successively, the mixture was stirred for another 15 h, and after the stirring was finished, filtration was performed using a 200-mesh filter screen 3 times to obtain the electrolyte additive.

### Example 10

This example provides an electrolyte additive for lithium-ion batteries and a preparation method thereof.

An electrolyte additive for lithium-ion batteries, which includes: a mixture of 100 parts by weight of lithium metaphosphate, 4320 parts by weight of fluoroethylene carbonate, 42 parts by weight of N-methyl-N-(2-hydroxyethyl)-4-aminobenzaldehyde, 25 parts by weight of 1-methyl-2-pyrrolylcarboxaldehyde and 5 parts by weight of flumiclorac-pentyl.

The preparation method includes the steps of:
in a nitrogen atmosphere, 100 parts of lithium metaphosphate were weighed and added to 4320 parts of fluoroethylene carbonate to obtain a mixture, the mixture was stirred for 1 h, 42 parts of N-methyl-N-(2-hydroxyethyl)-4-aminobenzaldehyde, 25 parts of 1-methyl-2-pyrrolylcarboxaldehyde and 5 parts of flumiclorac-pentyl were added successively, stirring was continued for another 16 h, and after the stirring was finished, filtration was performed using a 200-mesh filter screen 3 times to obtain the electrolyte additive.

### Example 11

This example provides an electrolyte additive for lithium-ion batteries and a preparation method thereof.

An electrolyte additive for lithium-ion batteries, which includes: a mixture of 100 parts by weight of lithium metaphosphate, 3700 parts by weight of fluoroethylene carbonate, 44 parts by weight of N-methyl-N-(2-hydroxyethyl)-4-aminobenzaldehyde, 25 parts by weight of 1-methyl-2-pyrrolylcarboxaldehyde and 7.2 parts by weight of cinflumide.

The preparation method includes the steps of:
in a nitrogen atmosphere, 100 parts of lithium metaphosphate were weighed and added to 3700 parts of fluoroethylene carbonate to obtain a mixture, the mixture was stirred for 1 h, 44 parts of N-methyl-N-(2-hydroxyethyl)-4-aminobenzaldehyde, 25 parts of 1-methyl-2-pyrrolylcarboxaldehyde and 7.2 parts of cinflumide were added successively, stirring was continued for another 16 h, and after the stirring was finished, filtration was performed using a 200-mesh filter screen 3 times to obtain the electrolyte additive.

### Example 12

This example provides an electrolyte additive for lithium-ion batteries and a preparation method thereof.

An electrolyte additive for lithium-ion batteries, which includes: a mixture of 100 parts by weight of lithium metaphosphate, 3700 parts by weight of fluoroethylene carbonate, 44 parts by weight of N-methyl-N-(2-hydroxyethyl)-4-aminobenzaldehyde, 25 parts by weight of 1-methyl-2-pyrrolylcarboxaldehyde and 9.4 parts by weight of teriflunomide.

The preparation method includes the steps of:
in a nitrogen atmosphere, 100 parts of lithium metaphosphate were weighed and added to 3700 parts of fluoroethylene carbonate to obtain a mixture, the mixture was stirred for 1 h, then 44 parts of N-methyl-N-(2-hydroxyethyl)-4-aminobenzaldehyde, 25 parts of 1-methyl-2-pyrrolylcarboxaldehyde and 9.4 parts of teriflunomide were added successively, the mixture was stirred for another 16 h, and after the stirring was finished, filtration was performed using a 200-mesh filter screen 3 times to obtain the electrolyte additive.

### Example 13

This example provides an electrolyte additive for lithium-ion batteries and a preparation method thereof.

An electrolyte additive for lithium-ion batteries, which includes: a mixture of 100 parts by weight of lithium metaphosphate, 3700 parts by weight of fluoroethylene carbonate, 44 parts by weight of N-methyl-N-(2-hydroxyethyl)-4-aminobenzaldehyde, 25 parts by weight of 1-methyl-2-pyrrolylcarboxaldehyde and 9.4 parts by weight of teriflunomide.

The preparation method includes the steps of:
in a nitrogen atmosphere, 100 parts of lithium metaphosphate were weighed and added to 3600 parts of ethylene carbonate to obtain a mixture, the mixture was stirred for 1 h, 44 parts of 2-pyrrolylcarboxaldehyde and 9.8 parts of perfluorotripropylamine were added successively, and stirring was continued for another 16 h, and after the stirring was finished, filtration was performed using a 200-mesh filter screen 3 times to obtain the electrolyte additive.

### Comparative Example 1

This comparative example provides an electrolyte additive for lithium-ion batteries and a preparation method thereof.

An electrolyte additive for lithium-ion batteries, which includes: a mixture of 100 parts by weight of lithium metaphosphate, 3700 parts by weight of fluoroethylene carbonate and 15.6 parts by weight of terephthalaldehyde.

The preparation method includes the steps of:
in a nitrogen atmosphere, 100 parts of lithium metaphosphate were weighed and added to 3700 parts of fluoroethylene carbonate to obtain a mixture, the mixture was stirred for 2 h, 15.6 parts of terephthalaldehyde were added, stirring was continued for another 12 h, and after the stirring was finished, filtration was performed using a 200-mesh filter screen 3 times to obtain the electrolyte additive.

### Comparative Example 2

This comparative example provides an electrolyte additive for lithium-ion batteries and a preparation method thereof.

An electrolyte additive for lithium-ion batteries, which includes: a mixture of 100 parts by weight of lithium metaphosphate, 4930 parts by weight of dimethyl carbonate, 44 parts by weight of 6-(2-thienyl)-2-pyridinecarboxaldehyde and 10 parts by weight of flumiclorac-pentyl.

The preparation method includes the steps of:
in a nitrogen atmosphere, 100 parts of lithium metaphosphate were weighed and added to 4930 parts of dimethyl carbonate to obtain a mixture, the mixture was stirred for 2 h, 44 parts of 6-(2-thienyl)-2-pyridinecarboxaldehyde and 10 parts of flumiclorac-pentyl were added successively, stirring was continued for another 12h, and after the stirring was finished, filtration was performed using a 200-mesh filter screen 3 times to obtain the electrolyte additive.

### Comparative Example 3

This comparative example provides an electrolyte additive for lithium-ion batteries and a preparation method thereof.

An electrolyte additive for lithium-ion batteries, which includes: a mixture of 100 parts by weight of lithium metaphosphate, 4930 parts by weight of dimethyl carbonate, 44 parts by weight of 6-(2-thienyl)-2-pyridinecarboxaldehyde and 10 parts by weight of flumiclorac-pentyl.

The preparation method includes the steps of:
in a nitrogen atmosphere, 100 parts of lithium metaphosphate were weighed and added to 4930 parts of fluoroethylene carbonate to obtain a mixture, the mixture was stirred for 2 h, 10 parts of flumiclorac-pentyl was added, stirring was continued for another 12h, and after the stirring was finished, filtration was performed using a 200-mesh filter screen 3 times to obtain the electrolyte additive.

### Comparative Example 4

This comparative example provides an electrolyte additive for lithium-ion batteries and a preparation method thereof.

An electrolyte additive for lithium-ion batteries, which includes: a mixture of 100 parts by weight of α,β-methyleneadenosine 5'-triphosphate lithium salt, 615 parts by weight of fluoroethylene carbonate and 33 parts by weight of 2-pyrrolylcarboxaldehyde.

The preparation method includes the steps of:
in an Ar atmosphere, 100 parts of α,β-methyleneadenosine 5'-triphosphate lithium salt were weighed and added to 615 parts of fluoroethylene carbonate to obtain a mixture, the mixture was stirred for 3 h, 33 parts of 2-pyrrolylcarboxaldehyde were added, stirring was continued for another 16 h, and after the stirring was finished, filtration was performed using a 200-mesh filter screen 3 times to obtain the electrolyte additive.

### Experimental Example

In this experimental example, the corrosion inhibition additives prepared in Examples 1-13 and Comparative Examples 1-5 were respectively used as functional additive components to prepare lithium batteries for electrochemical performance tests, with reference to GB/T 42260-2022 "Electrochemical Performance Test of Lithium Iron Phosphate-Test Method for Cycle Life" and GB/T 42161-2022 "Electrochemical Performance Test of Lithium Iron Phosphate-Test Methods for the Initial Discharge Specific Capacity and the Initial Efficiency".

The specific process involves: pre-treating some materials, followed by the preparation of the cathode sheet, anode sheet, separator, battery assembly, battery capacity sorting, and battery testing to obtain final test data. Specifically: the lithium iron phosphate cathode material used comes from Hubei Wanrun New Energy Technology Co., Ltd., the graphite anode from Ningbo Shanshan Co., Ltd., and other materials all meet the standard requirements. The lithium sheet is from China Energy Lithium Co., Ltd. (CEL). Kejing conductive sp was used as the conductive carbon material, and the electrolyte is a Base with a concentration of 1.0 mol/L LiPF₆ solution (the solvent is ethylene carbonate (EC), dimethyl carbonate (DMC) and methyl ethyl carbonate (EMC) in a volume ratio of 1:1:1) commercially available from Guangdong Zhuguang New Energy Technology Co. Ltd.

The method for testing the initial discharge capacity and initial charge-discharge efficiency involved placing the experimental battery in a constant temperature box maintained at (23±2) °C. It was left to stand for 1 to 2 hours before being tested with an ion battery electrochemical performance tester. The charging and discharging regime was as follows: for charging, at a 0.1C rate, the battery was charged with constant current up to 3.75 V, followed by constant voltage charging until the cut-off current of 0.05 C was reached; for discharging, at a 0.1C rate, the battery was discharged with constant current down to 2.0 V.

For the cycle life test, the experimental batteries, after formation and capacity separation, were tested using a lithium-ion battery electrochemical performance tester. The charging and discharging voltage limits were set as follows: the charging limit voltage involved constant current and voltage charging up to 3.6~3.7 V, with a constant charging cut-off current of 0.02 C~0.05 C; the discharge termination voltage ranged from 2.0 V to 2.5 V. These charge and discharge cycles were conducted at ambient temperatures of (23±2) °C and (55±2) °C, using a 1C/1C rate in accordance with GB/T18287 standards.

The test data from these procedures are shown in Table 1, where the amount is expressed as the percentage of the additive produced in the examples or comparative examples relative to the total mass of the electrolyte:

**Table 1**

| Example | Amount wt% | Initial discharge capacity mAh/g | Initial charge-discharge efficiency% | % Capacity retention rate after 500 cycles | % Capacity retention rate after 1000 cycles |
|---|---|---|---|---|---|
| Example 1 | 1 | 152 | 97.1 | 96.1 | 86.4 |
| Example 2 | 1 | 152 | 97.5 | 97.7 | 86.2 |
| Example 3 | 1 | 151 | 96.8 | 96.0 | 87.1 |
| Example 4 | 1 | 154 | 96.1 | 94.5 | 88.0 |
| Example 5 | 1 | 152 | 96.7 | 96.7 | 86.4 |
| Example 6 | 1 | 155 | 97.2 | 95.9 | 89.2 |
| Example 7 | 1 | 153 | 96.8 | 97.1 | 88.4 |
| Example 8 | 1 | 153 | 97.0 | 96.6 | 87.5 |
| Example 9 | 1 | 155 | 97.1 | 95.4 | 86.1 |
| Example 10 | 1 | 154 | 96.2 | 96.0 | 89.0 |
| Example 11 | 1 | 154 | 96.4 | 96.0 | 88.3 |
| Example 12 | 1 | 154 | 96.8 | 95.1 | 87.9 |
| Example 13 | 1 | 155 | 97.4 | 95.3 | 88.0 |
| Example 1 | 0.5 | 146 | 96.0 | 95.8 | 84.9 |
| Example 1 | 1.5 | 155 | 97.4 | 97.8 | 89.0 |
| Example 2 | 1.5 | 154 | 97.6 | 98.0 | 88.7 |
| Comparative Example 1 | 1 | 143 | 94.2 | 93.4 | 81.2 |
| Comparative Example 2 | 1 | 145 | 95.3 | 94.6 | 83.4 |
| Comparative Example 3 | 1 | 145 | 95.8 | 92.3 | 81.5 |
| Comparative Example 4 | 1 | 142 | 95.1 | 93.8 | 82.7 |

Under the condition of using an appropriate amount of corrosion inhibition additives, the electrochemical performance of lithium batteries is enhanced with the increase in additive concentration. Moreover, with an appropriate amount, the additives produced in the examples specifically mitigate the electrolyte's corrosive impact on electrode sheets, thereby enhancing performance.

In comparative examples 1 and 4 where no co-solvent components were added, the absence of co-solvents significantly reduces the solubility of the active components, making it difficult to achieve good corrosion inhibition effects. In comparative example 2 where dimethyl carbonate is used instead of fluoroethylene carbonate, although dimethyl carbonate has good solubility for other materials, it does not have the following effect: the F atom in the molecular structure of fluoroethylene carbonate has an electron-withdrawing effect that can reduce/passivate the electrode surface under high voltage conditions, forming a stable SEI film, and thus the overall effect of the comparative example is far inferior to that of the examples. In comparative example 3 where no corrosion inhibition aids are added, the overall effect is significantly inferior to that of the examples since the synergistic effect between the corrosion inhibitor and the corrosion inhibition aid is crucial for the corrosion inhibition effect.

While particular examples of the present invention have been illustrated and described, it is to be understood that the foregoing examples are merely illustrative and not restrictive of the present invention. A person skilled in the art will appreciate that modifications may be made to the technical solutions described in the foregoing examples, or equivalents may be substituted for some or all the technical features thereof, without departing from the spirit and scope of the present invention. However, these modifications or substitutions do not bring the essence of the corresponding technical solutions out of the scope of the technical solutions of the various examples of the present invention; it is therefore intended to cover in the appended claims all such alternatives and modifications that are within the scope of the present invention.

## Claims

1. An electrolyte additive for lithium-ion batteries, **characterized in that** the electrolyte additive comprises a mixture of a corrosion inhibitor, a corrosion inhibition aid, a film-forming agent, and a co-solvent, wherein a molar ratio of the corrosion inhibitor, the corrosion inhibition aid, the film-forming agent, and the co-solvent is 1:(0.1-1):(20-50):(0.01-0.1).

2. The electrolyte additive for lithium-ion batteries of claim 1, **characterized in that** the molar ratio of the corrosion inhibitor, the corrosion inhibition aid, the film-forming agent, and the co-solvent is 1: (0.1-0.4): (30-40): (0.01-0.03).

3. The electrolyte additive for lithium-ion batteries of claim 1, **characterized in that** the corrosion inhibitor comprises at least one of lithium metaphosphate, lithium guanosine triphosphate, α,β-methyleneadenosine 5'-triphosphate lithium salt, and (S)-ganciclovir-5'-triphosphate lithium salt.

4. The electrolyte additive for lithium-ion batteries of claim 1, **characterized in that** the corrosion inhibition aid comprises at least one of terephthalaldehyde, 6-(2-thienyl)-2-pyridinecarboxaldehyde, N-methyl-N-(2-hydroxyethyl)-4-aminobenzaldehyde, 2-pyrrolylcarboxaldehyde, 1-methyl-2-pyrrolylcarboxaldehyde, and 3-pyrrolylcarboxaldehyde.

5. The electrolyte additive for lithium-ion batteries of claim 1, **characterized in that** the film-forming agent comprises at least one of fluoroethylene carbonate and ethylene carbonate.

6. The electrolyte additive for lithium-ion batteries of claim 1, **characterized in that** the co-solvent comprises at least one of flumiclorac-pentyl, perfluorotripropylamine, cinflumide and teriflunomide.

7. A preparation method of the electrolyte additive for lithium-ion batteries of any one of claims 1 to 6, comprising steps of:
performing first mixing of a corrosion inhibitor and a film-forming agent in an inert atmosphere to obtain a mixture; and
adding successively a co-solvent and a corrosion inhibition aid to the mixture to perform second mixing followed by filtration to obtain the electrolyte additive.

8. The preparation method of the electrolyte additive for lithium-ion batteries of claim 7, **characterized in that** the first mixing is performed for 1 to 3 hours, and the second mixing is performed for 12 to 16 hours.

9. The preparation method of the electrolyte additive for lithium-ion batteries of claim 7, **characterized in that** the filtration is performed using a filter screen having a mesh size of 150 to 300 mesh.

10. A lithium-ion battery comprising the electrolyte additive for lithium-ion batteries of any one of claims 1 to 6 or the electrolyte additive for lithium-ion batteries obtained by the preparation method of any one of claims 7 to 9.
